# FASCICULE DE BREVET EUROPEEN

(11) **EP 4 497 168 B1**
(45) Date de publication et mention de la délivrance du brevet: **03.12.2025**
(21) Numéro de dépôt: 23710381.7
(22) Date de dépôt: 17.03.2023
(51) Int. Cl.: H01M 8/248, C25B 9/75

(54) **STRUCTURE DE PILE À COMBUSTIBLE OU D'ÉLECTROLYSEUR**
STRUKTUR EINER BRENNSTOFFZELLE ODER EINES ELEKTROLYSEURS
STRUCTURE OF A FUEL CELL OR ELECTROLYSER

(30) Priorité: 23.03.2022 FR 2202561
(43) Date de publication de la demande: 29.01.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: SIRAC, Denis, 38360 Sassenage (FR); ANDRÉ, Johan, 38360 Sassenage (FR)
(74) Mandataire: Air Liquide
(86) Numéro de dépôt international: PCT/EP2023/056852
(87) Numéro de publication internationale: WO 2023/180192

(56) Documents cités:
- CN-B- 105 552 422
- JP-A- 2006 040 716
- US-A1- 2021 202 974

## Description

La présente invention concerne une structure de pile à combustible, notamment du type à membrane échangeuse de protons (« PEMFC ») ou d'électrolyseur, comprenant un empilement de cellules élémentaires, les cellules comprenant chacune une plaque anodique et une plaque cathodique prenant en sandwich un Assemblage Membrane Electrodes (AMF).

Dans une telle structure, l'empilement est pris en sandwich entre deux plaques de serrage pour appliquer une pression de serrage déterminée sur l'empilement et au moins une extrémité de l'empilement comprenant une plaque collectrice de courant conductrice de l'électricité reliée électriquement aux cellules de l'empilement pour collecter la somme des courants électriques produits par les cellules. Un tirant sert à maintenir le serrage d'un tel empilement.

Un tel tirant peut céder lorsque la structure est soumise à des vibrations. En outre, lorsque le tirant est recouvert par un isolant, ce dernier peut s'user lorsque la structure est soumise à ces vibrations ou lorsqu'elle reçoit des chocs. Enfin, le tirant peut générer un court-circuit entre le tirant et les cellules, lorsqu'il n'est pas correctement centré par rapport aux ouvertures ménagées dans les cellules.

Les documents JP 2006 040713A, US 2021/202974A1 et CN 105 552 422B décrivent chacun un empilage de pile à combustible comprenant une pluralité de cellules.

La présente invention vise à remédier efficacement à ces inconvénients en proposant une pile à combustible à membrane échangeuse de protons comportant un empilement d'une pluralité de cellules, l'empilement étant pris en sandwich entre une première plaque de serrage et une deuxième plaque de serrage, pour appliquer une pression de serrage prédéterminée sur l'empilement, l'une des plaques de serrage comportant au moins une portée conique débouchant dans un trou traversant, la pile comportant au moins un dispositif de serrage comportant un tirant et une rondelle conique reçue par la portée conique de sorte que les parties coniques soient en vis-à-vis, le tirant étant maintenu en position par une première de ses extrémités, par la rondelle conique de sorte à appliquer la pression de serrage sur l'empilement.

Un tel agencement permet un réalignement automatique de l'empilement en cas de choc ou de vibration. Ceci permet d'éviter tout court-circuit entre le tirant et les ouvertures ménagées dans les cellules, pour le passage du tirant. En outre, lorsque le tirant est recouvert d'un isolant thermique et/ou électrique, l'usure de ce dernier est moindre, grâce à l'espace qui existe en permanence entre le trou traversant et le tirant.

Enfin, un tel agencement permet un serrage homogène de l'empilement ce qui permet d'éviter une rupture du tirant lorsque la pile est soumise à des vibrations.

Selon une réalisation, la portée conique et la rondelle conique sont agencées de sorte qu'un espace existe, notamment une couronne circulaire, entre le tirant et le trou traversant de la rondelle conique.

Selon une réalisation, la portée conique et la rondelle conique sont agencées de sorte qu'un espace existe en permanence tout autour du tirant, entre le tirant et le trou traversant de la rondelle conique.

Selon une réalisation, le tirant traverse de part en part la rondelle conique.

Un tel agencement permet de faciliter le montage de la pile.

Selon une réalisation, la portée conique est ménagée sur la face de la plaque de serrage opposée à l'empilement.

Selon une réalisation, le dispositif de serrage comporte un écrou vissé sur le tirant pour serrer la rondelle conique contre ladite plaque de serrage ou le dispositif de serrage comporte un organe de compensation pour compenser le changement dimensionnel dû aux cellules de l'empilement, l'organe de compensation comportant notamment un ressort disposé autour du tirant, l'organe de compensation étant disposé axialement entre la rondelle conique et un organe de fin de course, pour permettre à l'organe de compensation de provoquer un déplacement relatif de l'organe de fin de course par rapport à la rondelle conique.

En variante, la rondelle conique comporte un taraudage et la rondelle conique est vissé sur le tirant.

Selon une réalisation, l'organe de fin de course comporte un taraudage et est vissé sur le tirant.

Selon une réalisation, le tirant est maintenu à ses extrémités par un méplat de la rondelle conique et par un méplat de l'organe de fin de course.

Selon une réalisation, l'organe de compensation est agencé de sorte à maintenir un jeu entre la rondelle conique et l'organe de fin de course.

Selon une réalisation, le dispositif de serrage comporte, du côté de l'autre des plaques de serrage, un écrou vissé sur le tirant pour appliquer une force de serrage sur l'autre des plaques de serrage, ou un taraudage ménagé dans l'autre des plaques de serrage pour recevoir une deuxième des extrémités, notamment filetée, du tirant.

En variante, l'autre des plaques de serrage comporte au moins une portée conique débouchant dans un trou traversant, le dispositif de serrage comportant au moins deux rondelles coniques, chaque rondelle étant reçue respectivement par la portée conique de l'une et de l'autre des plaques de serrage, le tirant étant maintenu en position à chacune de ses extrémités, par les rondelles coniques de sorte à appliquer la pression de serrage sur l'empilement.

Selon une réalisation, chaque cellule comporte une ouverture pour le passage du tirant, le diamètre de l'ouverture étant supérieur strictement au diamètre interne de la rondelle conique.

Selon une réalisation, le rapport du diamètre de l'orifice sur le diamètre interne de la rondelle conique est prédéterminé pour éviter un contact entre le tirant et les cellules après centrage du tirant, le rapport étant notamment supérieur à 1,3, par exemple supérieur à 1,8.

Selon une réalisation, le diamètre intérieur de la rondelle conique à une extrémité du tirant est inférieur strictement au diamètre intérieur de la rondelle conique à une autre extrémité du tirant.

Un tel agencement permet l'installation d'un organe de compensation.

Selon une réalisation, le dispositif de serrage comporte une pluralité de tirants.

Selon une réalisation, chaque tirant est maintenu en position par au moins une rondelle conique, notamment par deux rondelles coniques.

Selon une réalisation, le tirant est dépourvu d'isolant thermique et/ou électrique le long de l'empilement, notamment sur le pourtour du tirant.

En variante, le tirant comporte un isolant thermique et/ou électrique sur son pourtour.

Dans un tel cas, l'invention permet d'éviter une usure de l'isolant, grâce à l'espace qui existe en permanence entre le trou traversant et le tirant, donc entre les ouvertures des cellules et les tirants.

Selon une réalisation, la portée conique présente une surface s'étendant sur tout le pourtour du trou traversant, la surface comportant notamment un tronc de cône de révolution.

Une telle portée conique permet un bon serrage tout en limitant les risques d'endommagement de la plaque de serrage.

Selon une réalisation, la surface de la portée conique comporte une portion en contact avec la rondelle conique.

Selon une réalisation la pile est dépourvue d'isolant électrique entre la rondelle conique et la portée conique.

Selon une réalisation, le trou traversant débouche hors de la plaque de serrage, uniquement par les faces latérales de la plaque de serrage, pour le passage du tirant.

Selon une réalisation, la pluralité de cellules comporte une première cellule à une première extrémité de l'empilement et une dernière cellule à une deuxième extrémité de l'empilement, chaque cellule de la pluralité comportant une plaque anodique et une plaque cathodique prenant en sandwich un Assemblage Membrane Electrodes.

Selon une réalisation, l'une des plaques de la première cellule forme avec l'une des plaques d'une autre des cellules, un premier circuit intercellulaire de refroidissement, l'autre des plaques de la première cellule définissant une première plaque d'extrémité, l'une des plaques de la dernière cellule formant avec l'une des plaques d'une autre des cellules, un dernier circuit intercellulaire de refroidissement, l'autre des plaques de la dernière cellule définissant une dernière plaque d'extrémité.

Selon une réalisation, la pile comporte une plaque de distribution comprenant une première face de collecte de courant électrique destinée à faire face à une première plaque collectrice de courant électrique et une face de distribution destinée à faire face à la face de refroidissement de la première plaque d'extrémité.

Selon une réalisation, le collecteur de distribution est agencé de sorte que la totalité du fluide entrant dans le collecteur de distribution, traverse la plaque de distribution dans son épaisseur pour distribuer le fluide dans la première cellule.

Selon une réalisation, la plaque de distribution comporte six collecteurs de distribution, notamment pour distribuer ou collecter un carburant, un comburant et un fluide de refroidissement.

Selon une réalisation, chaque plaque anodique ou cathodique comprend une face réactive et une face de refroidissement opposées l'une par rapport à l'autre, la face réactive de chaque plaque étant destinée à faire face à l'Assemblage Membrane Electrodes et étant munie de reliefs et de creux formant un circuit de réactif, pour la circulation d'un fluide réactif, la face de refroidissement de la plaque cathodique d'au moins une des cellules étant destinée à faire face à la face de refroidissement de la plaque anodique d'une autre des cellules, en définissant entre elles des reliefs et des creux pour former un circuit intercellulaire de refroidissement pour la circulation d'un fluide de refroidissement.

Selon une réalisation, chaque plaque cathodique ou anodique comporte un collecteur d'entrée de réactif formé au travers de la plaque et étant en communication fluidique avec le circuit de réactif, un collecteur de sortie de réactif formé au travers de la plaque et étant en communication fluidique avec le circuit de réactif, un collecteur d'entrée de fluide de refroidissement formé au travers de la plaque, un collecteur de sortie de fluide de refroidissement formé au travers de la plaque.

Selon une réalisation, la pile comporte une plaque d'obturation comprenant une deuxième face de collecte de courant électrique destinée à faire face à une deuxième plaque collectrice de courant électrique et une face d'obturation fixée à la face de refroidissement de la dernière plaque d'extrémité, la face d'obturation et la face de refroidissement de la dernière plaque d'extrémité définissant entre elles des reliefs et des creux pour former un dernier circuit de refroidissement pour la circulation du fluide de refroidissement.

Selon une réalisation, la pile à combustible est destinée à être alimentée par de l'hydrogène.

L'invention concerne en outre un électrolyseur, comportant un empilement d'une pluralité de cellules, l'empilement étant pris en sandwich entre une première plaque de serrage et une deuxième plaque de serrage, pour appliquer une pression de serrage prédéterminée sur l'empilement, l'une des plaques de serrage comportant au moins une portée conique débouchant dans un trou traversant, l'électrolyseur comportant au moins un dispositif de serrage comportant un tirant et une rondelle conique reçue par la portée conique de sorte que les parties coniques soient en vis-à-vis, le tirant étant maintenu en position par une première de ses extrémités, par la rondelle conique de sorte à appliquer la pression de serrage sur l'empilement.

Selon une réalisation, l'électrolyseur est destiné à fabriquer de l'hydrogène.

Les caractéristiques relatives à la pile à combustible sont applicables seules ou en combinaison à l'électrolyseur.

L'invention concerne enfin une structure de pile à combustible à membrane échangeuse de protons ou d'électrolyseur, la structure comportant un empilement d'une pluralité de cellules, l'empilement étant pris en sandwich entre une première plaque de serrage et une deuxième plaque de serrage, pour appliquer une pression de serrage prédéterminée sur l'empilement, l'une des plaques de serrage comportant au moins une portée conique débouchant dans un trou traversant, la structure comportant au moins un dispositif de serrage comportant un tirant et une rondelle conique reçue par la portée conique de sorte que les parties coniques soient en vis-à-vis, le tirant étant maintenu en position par une première de ses extrémités, par la rondelle conique de sorte à appliquer la pression de serrage sur l'empilement.

Les caractéristiques relatives à la pile à combustible sont applicables seules ou en combinaison à cette structure.

Selon une réalisation, la structure est une structure de pile destinée à être alimentée par de l'hydrogène ou une structure d'électrolyseur destiné à fabriquer de l'hydrogène.

L'invention sera mieux comprise à la lecture de la description qui suit et à l'examen des figures. Ces figures ne sont données qu'à titre illustratif mais nullement limitatif de l'invention.
[Fig.1] La [Fig.1] est une représentation schématique en coupe d'une pile selon l'invention ;
[Fig.2] La [Fig.2] est une représentation schématique en coupe d'une pile selon l'invention ;
[Fig.3] La [Fig.3] est une représentation schématique en coupe de la pile de la [Fig.1] ou de la [Fig.2] ; et
[Fig.4] la [Fig.4] est une représentation schématique en élévation de la pile de la [Fig.3].

Les éléments identiques, similaires, ou analogues, conservent la même référence d'une figure à l'autre.

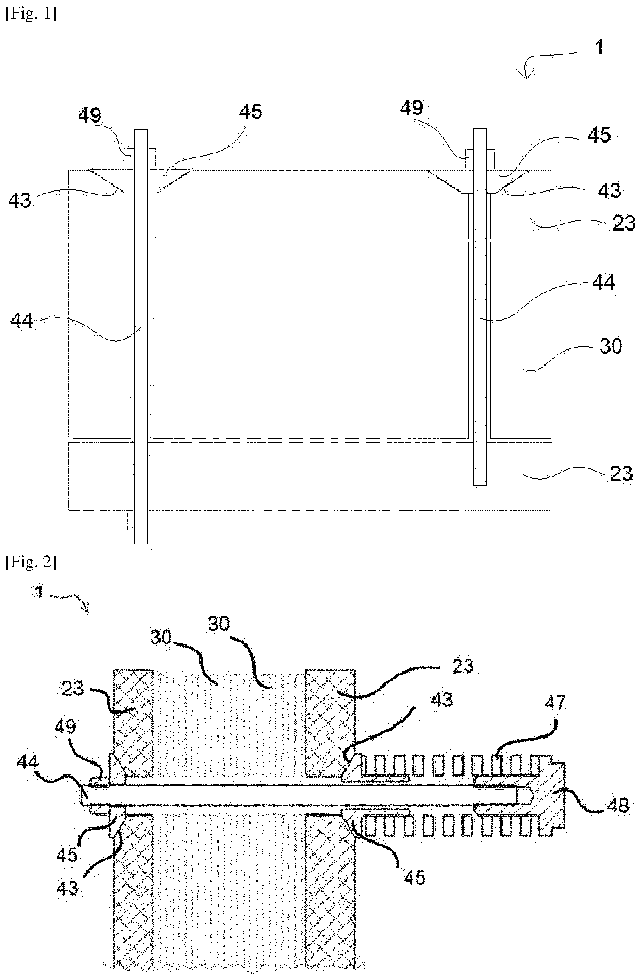

Comme visible sur la [Fig.1], une pile 1 à combustible à membrane échangeuse de protons

comporte un empilement d'une pluralité de cellules 30. L'empilement est pris en sandwich entre une première plaque de serrage 23 et une deuxième plaque de serrage 23, pour appliquer une pression de serrage prédéterminée sur l'empilement. La première plaque de serrage 23 comporte deux portées conique 43 débouchant chacune dans un trou traversant.

Chaque portée conique 43 est ménagée sur la face de la première plaque de serrage 23 opposée à l'empilement.

La pile 1 comporte au moins un dispositif de serrage comportant ici deux tirants 44 et deux rondelles coniques 45.

Chaque rondelle conique 45 est reçue par une des portées coniques 43 de sorte que les parties coniques de la rondelle et de la portée conique soient en vis-à-vis en étant en contact.

Chaque tirant 44 est monté par une de ses extrémités dans une des rondelles coniques 45 et par une autre de ses extrémités, soit dans un écrou (le tirant de gauche, sur la [Fig.1]) soit dans un taraudage ménagé dans la plaque de serrage 23 (le tirant de droite sur la [Fig.1]).

Chaque tirant 44 traverse de part en part chacune des deux rondelles coniques 45 et un écrou 49 est vissé une extrémité filetée du tirant, pour effectuer le serrage de la pile, l'écrou 49 venant en butée contre la rondelle conique 45.

La [Fig.2] illustre une pile identique à celle de la [Fig.1], mais dans laquelle on a représenté un tirant maintenu en position par deux rondelles coniques.

La première plaque de serrage 23 et la deuxième plaque de serrage 23 comportent chacune une portée conique 43 débouchant dans un trou traversant et le dispositif de serrage comporte deux rondelles coniques 45.

La rondelle conique 45 du côté de la première plaque 23 est reçue par la portée conique 43 de la première plaque de sorte que les parties coniques soient en vis-à-vis.

La rondelle conique 45 du côté de la deuxième plaque 23 est reçue par la portée conique 43 de la deuxième plaque de sorte que les parties coniques soient en vis-à-vis.

Le tirant 44 est logé entre les deux rondelles coniques 45, pour appliquer la pression de serrage sur l'empilement.

Le tirant 44 traverse de part en part chacune des deux rondelles coniques 45.

Comme visible sur la [Fig.2], le dispositif de serrage comporte en outre un organe de compensation 47 pour compenser le changement dimensionnel dû aux cellules 30 de l'empilement.

Bien que non représenté sur la [Fig.1], un tel organe de compensation 47 peut être installé au niveau la rondelle conique 45 de l'un des tirants ou de chaque tirant de la pile de la [Fig.1].

L'organe de compensation 47 comporte un ressort 47 disposé à une première extrémité du tirant 44, entre la rondelle conique 45 et un organe de fin de course 48.

L'organe de compensation 47 est monté autour du tirant 44, le tirant 44 étant maintenu à ses extrémités par un méplat de la rondelle conique 45 et par un méplat de l'organe de fin de course 48. Dans l'exemple représenté à la [Fig.2], l'organe de fin de course 48 comporte un taraudage et est vissé sur une extrémité filetée du tirant 44.

Le dispositif de serrage comporte un écrou 49 vissé sur l'autre extrémité du tirant 44, l'écrou 49 venant au contact de l'une des rondelles coniques 45.

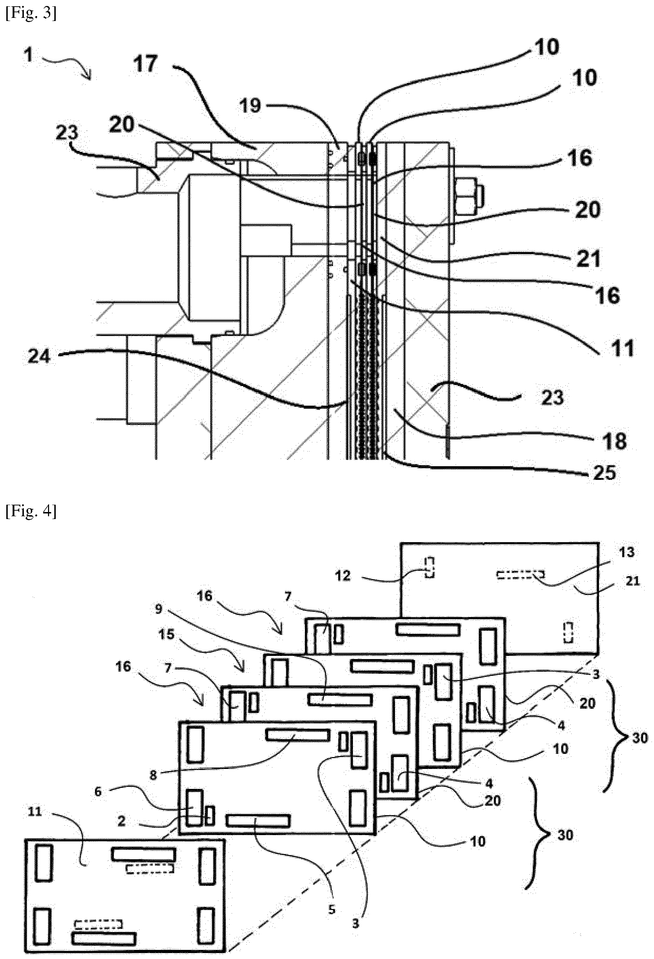

Comme visible sur la [Fig.3], la pluralité de cellules 30 comporte une première cellule 30 à une première extrémité de l'empilement et une dernière cellule 30 à une deuxième extrémité de l'empilement.

Chaque cellule 30 de la pluralité comporte une plaque anodique 10 et une plaque cathodique 20 prenant en sandwich un Assemblage Membrane Electrodes 16, l'une des plaques 10, 20 de la première cellule 30 formant avec l'une des plaques 10, 20 d'une autre des cellules 30, un premier circuit intercellulaire de refroidissement 15, l'autre des plaques 10, 20 de la première cellule 30 définissant une première plaque d'extrémité, l'une des plaques 10, 20 de la dernière cellule 30 formant avec l'une des plaques 10, 20 d'une autre des cellules 30, un dernier circuit intercellulaire de refroidissement 15, l'autre des plaques 10, 20 de la dernière cellule 30 définissant une dernière plaque d'extrémité.

La pile 1 comporte une plaque de distribution 11 comprenant une première face de collecte de courant électrique destinée à faire face à une première plaque collectrice 24 de courant électrique et une face de distribution destinée à faire face à la face de refroidissement de la première plaque d'extrémité.

La pile 1 comporte un premier joint 19 interposé entre la plaque de distribution 11 et la première plaque de serrage 17, 23, la plaque de distribution 11 comportant au moins un collecteur de distribution d'un fluide formé au travers de la plaque, la première face de collecte de courant électrique et/ou la première plaque de serrage 17, 23 comportant une lèvre annulaire ménagée autour du collecteur de distribution, de sorte à pincer le premier joint 19 pour assurer une étanchéité vis-à-vis du fluide.

La première face de collecte de courant électrique comporte un premier embossage pour recevoir la première plaque collectrice 24, de sorte que la plaque de distribution 11 et la première plaque collectrice 24 forment ensemble une face plane pour venir en contact avec le premier joint 19.

Le premier joint 19 comporte au moins un trou traversant pour le passage du tirant.

La pile 1 comporte une plaque d'obturation 21 comprenant une deuxième face de collecte de courant électrique destinée à faire face à une deuxième plaque collectrice de courant électrique 25 et une face d'obturation fixée à la face de refroidissement de la dernière plaque d'extrémité, la face d'obturation et la face de refroidissement de la dernière plaque d'extrémité définissant entre elles des reliefs et des creux pour former un dernier circuit de refroidissement pour la circulation du fluide de refroidissement.

La pile 1 comporte un deuxième joint 18 interposé entre la deuxième plaque collectrice 25 et la deuxième plaque de serrage 23.

La [Fig.4] représente la pile 1 en élévation, avant assemblage.

Comme visible sur la [Fig.4], chaque plaque 10, 20 comporte :
- un collecteur d'entrée de réactif 3, 4 formé au travers de la plaque 10, 20 et étant en communication fluidique avec le circuit de réactif par l'intermédiaire d'une première lumière 2 formée au travers de la plaque 10, 20 ;
- un collecteur de sortie de réactif 6, 7 formé au travers de la plaque 10, 20 et étant en communication fluidique avec le circuit de réactif par l'intermédiaire d'une deuxième lumière 2 formée au travers de la plaque 10, 20 ;
- un collecteur d'entrée de fluide de refroidissement 5 formé au travers de la plaque 10, 20 ;
- un collecteur de sortie de fluide de refroidissement 8, 9 formé au travers de la plaque 10, 20.
- au moins deux orifices formés au travers de la plaque 10, 20, chaque orifice étant agencé pour ne permettre une communication fluidique qu'au travers de la plaque 10, 20, sans être en communication fluidique avec le circuit de réactif.

Le collecteur d'entrée de réactif 3 d'une plaque anodique 10 est en communication fluidique avec un des orifices d'une plaque cathodique 20 et le collecteur de sortie de réactif 6 de la plaque anodique 10 est en communication fluidique avec un autre des orifices de la plaque cathodique 20.

Le collecteur d'entrée de réactif 3 d'une plaque cathodique 20 est en communication fluidique avec un des orifices d'une plaque anodique 10 et le collecteur de sortie de réactif 6 de la plaque cathodique 20 est en communication fluidique avec un autre des orifices de la plaque anodique 10.

Ainsi, l'empilement permet une distribution du fluide réactif dédié aux plaques anodiques 10 et une distribution du fluide réactif dédié aux plaques cathodiques 20 en formant deux circuits indépendants.

La face d'obturation de la plaque d'obturation 21 comporte un passage de réactif 12, 13 formé par des reliefs et des creux, pour permettre une communication fluidique entre le collecteur d'entrée de réactif 3, 4 et le circuit de réactif ou pour permettre une communication fluidique entre le collecteur de sortie de réactif 6, 7 et le circuit de réactif.

La face d'obturation de la plaque d'obturation 21 comporte un passage de refroidissement 13 formé par des reliefs et des creux, pour permettre une communication fluidique entre le collecteur d'entrée de fluide de refroidissement 5 et le circuit de refroidissement ou pour permettre une communication fluidique entre le collecteur de sortie de fluide de refroidissement 8, 9 et le circuit de refroidissement.

Le passage de réactif 12, 13 et le passage de refroidissement 13 peut être ménagé au niveau de la face d'obturation, au niveau de la dernière plaque d'extrémité ou encore sur les deux.

## Revendications

1. Structure de pile à combustible à membrane échangeuse de protons (1) ou d'électrolyseur, la structure comportant un empilement d'une pluralité de cellules (30), l'empilement étant pris en sandwich entre une première plaque de serrage (23) et une deuxième plaque de serrage (23), pour appliquer une pression de serrage prédéterminée sur l'empilement, l'une des plaques de serrage (23) comportant au moins une portée conique (43) débouchant dans un trou traversant, la structure comportant au moins un dispositif de serrage comportant un tirant (44) et une rondelle conique (45) reçue par la portée conique (43) de sorte que les parties coniques soient en vis-à-vis, le tirant (44) étant maintenu en position par une première de ses extrémités, par la rondelle conique (45) de sorte à appliquer la pression de serrage sur l'empilement.

2. Structure selon la revendication 1, le tirant (44) traversant de part en part la rondelle conique (45).

3. Structure selon l'une des revendications 1 à 2, la portée conique (43) étant ménagée sur la face de ladite plaque de serrage (23) qui est opposée à l'empilement.

4. Structure selon l'une des revendications 1 à 3, le dispositif de serrage comportant un écrou (49) vissé sur le tirant (44) pour serrer la rondelle conique (45) contre ladite plaque de serrage (23) ou le dispositif de serrage comportant un organe de compensation (47) pour compenser le changement dimensionnel dû aux cellules de l'empilement, l'organe de compensation (47) comportant notamment un ressort (47) disposé autour du tirant (44), l'organe de compensation (47) étant disposé axialement entre la rondelle conique (45) et un organe de fin de course (48), pour permettre à l'organe de compensation (47) de provoquer un déplacement relatif de l'organe de fin de course (48) par rapport à la rondelle conique (45).

5. Structure selon la revendication 4, l'organe de fin de course (48) comportant un taraudage et étant vissé sur le tirant (44).

6. Structure selon l'une des revendications 1 à 5, le tirant (44) étant dépourvu d'isolant thermique et/ou électrique le long de l'empilement.

7. Structure selon l'une des revendications 1 à 6, le dispositif de serrage comportant, du côté de l'autre des plaques de serrage (23), un écrou (49) vissé sur le tirant (44) pour appliquer une force de serrage sur l'autre des plaques de serrage (23), ou un taraudage ménagé dans l'autre des plaques de serrage (23) pour recevoir une deuxième des extrémités, notamment filetée, du tirant (44).

8. Structure selon l'une des revendications 1 à 7, l'autre des plaques de serrage (23) comportant au moins une portée conique (43) débouchant dans un trou traversant, le dispositif de serrage comportant au moins deux rondelles coniques (45), chaque rondelle étant reçue respectivement par la portée conique (43) de l'une et de l'autre des plaques de serrage (23), le tirant (44) étant maintenu en position à chacune de ses extrémités, par les rondelles coniques (45) de sorte à appliquer la pression de serrage sur l'empilement.

9. Structure selon l'une des revendications 1 à 8, chaque cellule comportant une ouverture pour le passage du tirant (44), le diamètre de l'ouverture étant supérieur strictement au diamètre interne de la rondelle conique (45).

10. Pile (1) à combustible à membrane échangeuse de protons comportant une structure selon l'une des revendications 1 à 9.

11. Électrolyseur comportant une structure selon l'une des revendications 1 à 9.

## Patentansprüche

1. Struktur einer Protonenaustauschmembran-Brennstoffzelle (1) oder eines Elektrolyseurs, wobei die Struktur einen Stapel aus einer Vielzahl von Zellen (30) aufweist, wobei der Stapel zwischen einer ersten Klemmplatte (23) und einer zweiten Klemmplatte (23) sandwichartig angeordnet ist, um einen vorbestimmten Klemmdruck auf den Stapel auszuüben, wobei eine der Klemmplatten (23) mindestens einen konischen Sitz (43) aufweist, der in eine Durchgangsbohrung mündet, wobei die Struktur mindestens eine Klemmvorrichtung aufweist, die eine Zugstange (44) und eine konische Unterlegscheibe (45) umfasst, die von dem konischen Sitz (43) so aufgenommen wird, dass die konischen Teile einander gegenüberliegen, wobei die Zugstange (44) durch eines ihrer Enden durch die konische Unterlegscheibe (45) in Position gehalten wird, um den Klemmdruck auf den Stapel auszuüben.

2. Struktur nach Anspruch 1, wobei die Zugstange (44) die konische Unterlegscheibe (45) vollständig durchdringt.

3. Struktur nach einem der Ansprüche 1 bis 2, wobei der konische Sitz (43) auf der dem Stapel gegenüberliegenden Seite der besagten Klemmplatte (23) ausgebildet ist.

4. Struktur nach einem der Ansprüche 1 bis 3, wobei die Klemmvorrichtung eine Mutter (49) aufweist, die auf die Zugstange (44) geschraubt ist, um die konische Unterlegscheibe (45) gegen die besagte Klemmplatte (23) zu klemmen, oder die Klemmvorrichtung ein Ausgleichselement (47) aufweist, um die durch die Zellen des Stapels bedingte Maßänderung auszugleichen, wobei das Ausgleichselement (47) insbesondere eine um die Zugstange (44) angeordnete Feder (47) aufweist, wobei das Ausgleichselement (47) axial zwischen der konischen Unterlegscheibe (45) und einem Endanschlagselement (48) angeordnet ist, um dem Ausgleichselement (47) zu ermöglichen, eine relative Verschiebung des Endanschlagselements (48) gegenüber der konischen Unterlegscheibe (45) zu bewirken.

5. Struktur nach Anspruch 4, wobei das Endanschlagselement (48) ein Gewinde aufweist und auf die Zugstange (44) geschraubt ist.

6. Struktur nach einem der Ansprüche 1 bis 5, wobei die Zugstange (44) entlang des Stapels frei von thermischer und/oder elektrischer Isolierung ist.

7. Struktur nach einem der Ansprüche 1 bis 6, wobei die Klemmvorrichtung auf der Seite der anderen der Klemmplatten (23) eine Mutter (49) aufweist, die auf die Zugstange (44) geschraubt ist, um eine Klemmkraft auf die andere der Klemmplatten (23) auszuüben, oder ein in der anderen der Klemmplatten (23) ausgebildetes Gewinde zur Aufnahme eines zweiten, insbesondere mit Gewinde versehenen Endes der Zugstange (44).

8. Struktur nach einem der Ansprüche 1 bis 7, wobei die andere der Klemmplatten (23) mindestens einen konischen Sitz (43) aufweist, der in eine Durchgangsbohrung mündet, wobei die Klemmvorrichtung mindestens zwei konische Unterlegscheiben (45) aufweist, wobei jede Unterlegscheibe jeweils von dem konischen Sitz (43) der einen und der anderen der Klemmplatten (23) aufgenommen wird, wobei die Zugstange (44) an jedem ihrer Enden durch die konischen Unterlegscheiben (45) in Position gehalten wird, um den Klemmdruck auf den Stapel auszuüben.

9. Struktur nach einem der Ansprüche 1 bis 8, wobei jede Zelle eine Öffnung für den Durchgang der Zugstange (44) aufweist, wobei der Durchmesser der Öffnung streng größer ist als der Innendurchmesser der konischen Unterlegscheibe (45).

10. Brennstoffzelle (1) mit Protonenaustauschmembran, die eine Struktur nach einem der Ansprüche 1 bis 9 aufweist.

11. Elektrolyseur, der eine Struktur nach einem der Ansprüche 1 bis 9 aufweist.

## Claims

1. A proton exchange membrane fuel cell (1) or electrolyzer structure, the structure comprising a stack of a plurality of cells (30), the stack being sandwiched between a first clamping plate (23) and a second clamping plate (23), to apply a predetermined clamping pressure on the stack, one of the clamping plates (23) comprising at least one conical seat (43) opening into a through-hole, the structure comprising at least one clamping device comprising a tie rod (44) and a conical washer (45) received by the conical seat (43) such that the conical parts face each other, the tie rod (44) being held in position by a first of its ends, by the conical washer (45) so as to apply the clamping pressure on the stack.

2. The structure according to claim 1, wherein the tie rod (44) passes right through the conical washer (45).

3. The structure according to one of claims 1 to 2, wherein the conical seat (43) is formed on the face of said clamping plate (23) which is opposite the stack.

4. The structure according to one of claims 1 to 3, wherein the clamping device comprises a nut (49) screwed onto the tie rod (44) to clamp the conical washer (45) against said clamping plate (23) or the clamping device comprises a compensation member (47) to compensate for the dimensional change due to the cells of the stack, the compensation member (47) comprising in particular a spring (47) disposed around the tie rod (44), the compensation member (47) being disposed axially between the conical washer (45) and an end-of-travel member (48), to allow the compensation member (47) to cause a relative displacement of the end-of-travel member (48) with respect to the conical washer (45).

5. The structure according to claim 4, wherein the end-of-travel member (48) comprises a thread and is screwed onto the tie rod (44).

6. The structure according to one of claims 1 to 5, wherein the tie rod (44) is devoid of thermal and/or electrical insulation along the stack.

7. The structure according to one of claims 1 to 6, wherein the clamping device comprises, on the side of the other of the clamping plates (23), a nut (49) screwed onto the tie rod (44) to apply a clamping force on the other of the clamping plates (23), or a thread formed in the other of the clamping plates (23) to receive a second of the ends, notably threaded, of the tie rod (44).

8. The structure according to one of claims 1 to 7, wherein the other of the clamping plates (23) comprises at least one conical seat (43) opening into a through-hole, the clamping device comprising at least two conical washers (45), each washer being respectively received by the conical seat (43) of one and the other of the clamping plates (23), the tie rod (44) being held in position at each of its ends, by the conical washers (45) so as to apply the clamping pressure on the stack.

9. The structure according to one of claims 1 to 8, wherein each cell comprises an opening for the passage of the tie rod (44), the diameter of the opening being strictly greater than the internal diameter of the conical washer (45).

10. A proton exchange membrane fuel cell (1) comprising a structure according to one of claims 1 to 9.

11. An electrolyzer comprising a structure according to one of claims 1 to 9.
